# EUROPEAN PATENT APPLICATION

(11) **EP 4 144 472 A1**
(43) Date of publication of application: **08.03.2023**
(21) Application number: 21795815.6
(22) Date of filing: 21.04.2021
(51) Int. Cl.: B23K 15/08, B23K 15/00, B23K 26/38, B23K 26/14, B23K 26/70, B28D 1/22

(54) **CERAMIC CUTTING METHOD AND EQUIPMENT**

(30) Priority: 28.04.2020 KR 20200051844; 28.04.2020 KR 20200091290
(71) Applicant: Iti Co., Ltd., Gyeonggi-do 14118 (KR)
(72) Inventor: LEE, Jung Joon, Seoul 03466 (KR); RYU, Ji Yun, Uiwang-si, Gyeonggi-do 16042 (KR)
(74) Representative: Müller Verweyen
(86) International application number: PCT/KR2021/005025
(87) International publication number: WO 2021/221378

(57) **Abstract**

The present invention relates to a ceramic cutting method and equipment, which is provided with a configuration comprising: a beam irradiation unit for irradiating a beam of a wavelength that is absorbed by a pattern formed on an upper surface of a ceramic and partially absorbed by the ceramic; a coolant spraying unit for spraying a coolant onto the ceramic irradiated with the beam, wherein part or all of the pattern is removed by heating and cooling the ceramic at the same time, and is cut by reducing thermal damage by using the stress caused by the recrystallization of an upper layer or all of the ceramic or the stress generated by the thermal expansion and contraction of the upper layer or all of the ceramic, thereby recrystallizing the ceramic by heating and cooling the ceramic at the same time, or cutting the ceramic by heating until the ceramic melts, and cooling to apply thermal stress to the inside of the ceramic, followed by an additional separation process of a ceramic material without loss.

## Description

### [Technical Field]

The present invention relates to a ceramic cutting method and equipment, and more particularly, to a ceramic cutting method and equipment to cut a ceramic having a pattern by using a beam of a wavelength absorbed inside the pattern and the ceramic.

### [Background Art]

Recently, new ceramic materials formed using high-purity synthetic raw materials such as silicon carbide, silicon nitride, alumina, zirconia, and barium titanate have been spotlighted unlike conventional ceramic materials mainly formed using natural raw materials such as clay, kaolin, feldspar, and silica, and have been used in a wide range of fields such as electricity, magnetism, machinery, chemistry, optics, and biotechnology.

The above ceramic materials (hereinafter referred to as 'ceramic') have been heated using a laser or a high-power beam and a part of the material is melted or vaporized so as to be removed and cut.

However, it is actually difficult to apply the cutting method according to the related art since thermal damage to the material is large, dust is generated, and a cutting strength is decreased.

Accordingly, a method of simply cooling a surface of the material by using air or liquid has been applied to reduce the thermal damage. However, it is basically difficult to apply the method to mass production since a lot of dust and heat damage occur in the process of melting and vaporizing the material to remove a part of the material and cutting the material.
(Patent Document 1) Korean Registered Patent No. 10-1119289 (Published on March 15, 2012)
(Patent Document 2) Japanese Patent Publication No. 2013-112532 (Published on June 10, 2013)

### [Disclosure]

### [Technical Problem]

An object of the present invention is to provide a ceramic cutting method and equipment to simultaneously heat and cool a ceramic to recrystallize the ceramic, or cutting the ceramic right before the ceramic is melted, and cool the ceramic to apply a thermal stress to an inside of the ceramic, followed by an additional separation process of a ceramic material without loss.

### [Technical Solution]

In order to achieve the above-described object, ceramic cutting equipment according to the present invention includes: a beam irradiation unit for irradiating a beam of a wavelength absorbed by a pattern formed on an upper surface of a ceramic and partially absorbed by the ceramic; a coolant spraying unit for spraying a coolant onto the ceramic irradiated with the beam, and a separation unit for separating the ceramic by providing force or shock to a stress line formed in the ceramic due to heating and cooling by the beam and the coolant, wherein part or all of the pattern is removed by heating and cooling the ceramic at the same time and a stress is caused by recrystallization or thermal expansion and contraction of an upper layer or all of the ceramic, and additional force or shock is provided onto the stress line, thereby cutting the ceramic while reducing thermal damage.

In addition, in order to achieve the above-described object, a ceramic cutting method according to the present invention includes the steps of: (a) irradiating a beam of a wavelength absorbed by a pattern formed on an upper surface of a ceramic and partially absorbed by the ceramic; (b) spraying, by a coolant spraying unit, a coolant onto the ceramic irradiated with the beam; and (c) cutting, by a separation unit, the ceramic by providing force or shock to a stress line formed in the ceramic due to the heating and cooling by the beam and the coolant, wherein part or all of the pattern is removed by heating and cooling the ceramic at the same time and a stress is caused by recrystallization or thermal expansion and contraction of an upper layer or all of the ceramic, and additional force or shock is provided onto the stress line, thereby cutting the ceramic while reducing thermal damage.

### [Advantageous Effects]

As described above, according to the ceramic cutting method and the equipment therefor of the present invention, the ceramic is simultaneously heated and cooled to recrystallize the ceramic, or the ceramic is heated and cooled right before the ceramic melts to apply a thermal stress to an inside of the ceramic, so that the ceramic material can be cut by an additional separation process without loss.

Therefore, according to the present invention, it is unnecessary to apply a water-soluble protective film (HogoMax) to prevent foreign substances from adhering to a processing surface before cutting processing, so that workability and efficiency can be improved, and reliability of a ceramic-applied device can be increased.

### [Description of Drawings]

FIG. 1 is a block diagram of ceramic cutting equipment according to a preferred embodiment of the present invention.
FIG. 2 is a view for explaining the principle of cutting a ceramic by using the ceramic cutting equipment shown in FIG. 1.
FIG. 3 is a view showing a process of cutting the ceramic by providing force or shock to a stress line.
FIG. 4 is a process diagram for explaining the ceramic cutting method step by step according to a preferred embodiment of the present invention.
FIGS. 5 and 6 are a plan view and a sectional view showing a cut state of the ceramic.

### [Best Mode]

### [Mode for Invention]

Hereinafter, a ceramic cutting method and equipment according to a preferred embodiment of the present invention will be described with reference to the accompanying drawings.

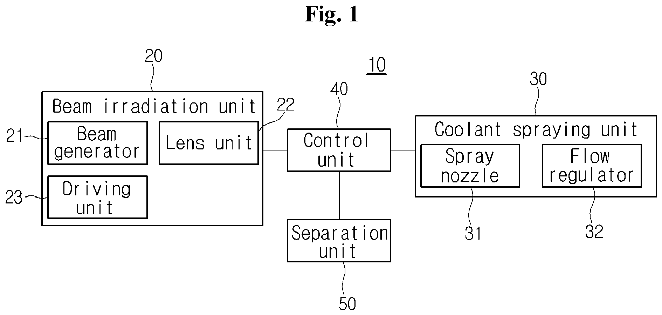

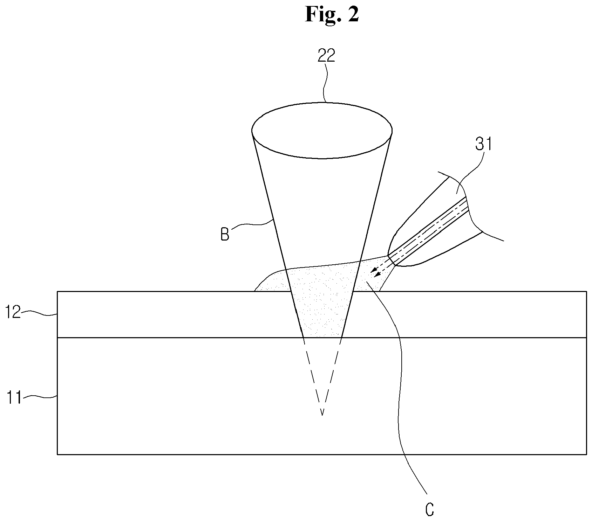

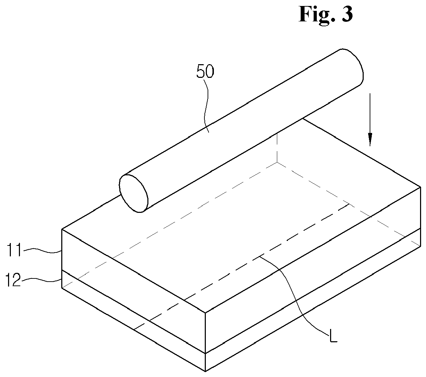

FIG. 1 is a block diagram of ceramic cutting equipment according to a preferred embodiment of the present invention. FIG. 2 is a view for explaining the principle of cutting a ceramic by using a beam and a coolant. FIG. 3 is a view showing a process of cutting the ceramic by providing force or shock to a stress line.

As shown in FIGS. 1 to 3, ceramic cutting equipment 10 according to a preferred embodiment of the present invention includes: a beam irradiation unit 20 for irradiating a beam B of a wavelength absorbed by a pattern 12 and partially absorbed by a ceramic 11 in order to cut the ceramic 11 formed thereon with the pattern 12; a coolant spraying unit 30 for spraying a coolant C onto the ceramic 11 irradiated thereon with the beam; and a separation unit 50 for providing force or shock to a stress line L while the ceramic 11 having the stress line L formed by heating and cooling the ceramic by the beam and the coolant is upside down, wherein part or all of the pattern 12 is removed by simultaneously heating and cooling the ceramic 11 and a stress is generated by recrystallization or thermal expansion and contraction of an upper layer or all of the ceramic 11, and additional force or shock is provided onto the stress line L, thereby cutting the ceramic while reducing thermal damage.

In addition, the ceramic cutting equipment 10 may further include a control unit 40 for controlling an operation of each device.

The control unit 40 may generate a control signal to adjust an amount of a coolant sprayed from the coolant spraying unit 30 in proportion to intensity of the beam irradiated from the beam irradiation unit 20.

The beam irradiation unit 20 may include a beam generator 21 for generating a beam having a preset wavelength and intensity in order to simultaneously cut the pattern 12 and the ceramic 11, a lens unit 22 for focusing the beam generated by the beam generator 21 to irradiate the focused beam toward the ceramic 11, and a driving unit 23 for driving the lens unit 22 to allow the beam to move in a direction to be cut.

The beam irradiated from the beam irradiation unit 20 may have a wavelength of about 0.1 um to about 11 um and an energy density of about 0.1 mw/cm², that is, 1×10¹ mW/mm² or more, as an output, and may proceed at a speed of about 1 mm/s to about 10 m/s.

In other words, in the present embodiments, the beam irradiation unit 20 sets the output of the beam to heat the ceramic 11 until the ceramic is recrystallized or melted, and irradiates the beam at the set output.

Thus, according to the present invention, thermal damage or loss of the ceramic heated by the beam can be prevented or minimized.

The coolant spraying unit 30 may include an injection nozzle 31 for spraying the coolant, and a flow regulator 32 for regulating a flow rate of the coolant sprayed through the injection nozzle 31.

The injection nozzle 31 may spray the coolant at a preset pressure after mixing a coolant with a fluid for cooling the ceramic irradiated with the beam.

For example, the coolant formed by mixing water and air may be sprayed toward an irradiation area to which the beam is irradiated at a preset pressure.

Accordingly, the cooling area to which the coolant is sprayed may transmit the beam toward the pattern 12 and the ceramic 11.

The cooling area may be defined to cool the entire irradiation area to which the beam is irradiated, or cool a part of the irradiation area.

Accordingly, a depth at which the beam is absorbed into the ceramic 11 may be adjusted according to an absorption thickness at which the beam is absorbed by the ceramic 11.

The separation unit 50 functions to separate the ceramic by providing force or shock to the stress line L formed inside the ceramic 11 while being heated and cooled by the beam and the coolant.

For example, as shown in FIG. 3, the separation unit 50 may be provided as a separation roller or a separation bar elongating and extending to correspond to the stress line L formed in the ceramic 11.

The separation roller or the separation bar may descend by a driving module (not shown) driven according to the control signal of the control unit 40 to provide the force or shock to the stress line L formed in the ceramic 11. In addition, the separation roller or the separation bar may have a central portion formed in a curved shape convex downward in order to effectively provide the force or shock to the stress line L.

The present invention is not limited thereto, and it may be modified such that a rib may protrude upwards under the stress line of the ceramic, or a semiconductor process film attached to a bottom of the ceramic may expand by applying heat thereto so as to separate and cut the ceramic around the stress line. In addition, according to the present invention, the ceramic may be separated by using a separate laser or ultrasonic wave to by apply force or shock to the stress line.

In addition, based on the test results, it can be confirmed that the cutting performance is improved when force or shock is applied from the top after the ceramic is inverted upside down, compared to applying force or shock from the top of the ceramic formed thereon with the stress line.

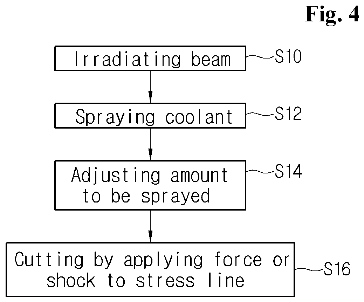

Next, the ceramic cutting method according to a preferred embodiment of the present invention will be described in detail with reference to FIG. 4.

FIG. 4 is a process diagram for explaining the ceramic cutting method step by step according to a preferred embodiment of the present invention.

In step S10 of FIG. 4, the beam irradiation unit 20 generates a beam with a preset output and irradiates the beam toward the ceramic 11.

The irradiated beam has a wavelength absorbed by the pattern and partially absorbed by the ceramic, and has an output capable of heating the ceramic 11 until the ceramic is recrystallized or melted.

Therefore, according to the present invention, thermal damage or loss caused when the ceramic heated by the beam is melted or vaporized can be prevented.

In step S12, the coolant spraying unit 30 sprays the coolant on the ceramic 11 irradiated with the beam.

Therefore, according to the present invention, part or all of the pattern is removed by heating and cooling the ceramic at the same time and a stress is generated by recrystallization or thermal expansion and contraction of an upper layer or all of the ceramic, so that the stress line can be formed in the ceramic.

In addition, in step S14, the control unit 40 generates a control signal to adjust an amount of the coolant sprayed from the coolant spraying unit 30 in proportion to intensity of the beam irradiated from the beam irradiation unit 20. Accordingly, the flow regulator 32 adjusts the flow rate of the coolant injected through the injection nozzle 31 according to the control signal of the control unit 40.

In step S16, the separation unit 50 descends due to the driving of the driving module according to the control signal of the control unit 40 to provide force or shock to the stress line L formed in the ceramic 11 inverted upside down, thereby cutting and separating the ceramic 11 about the stress line L.

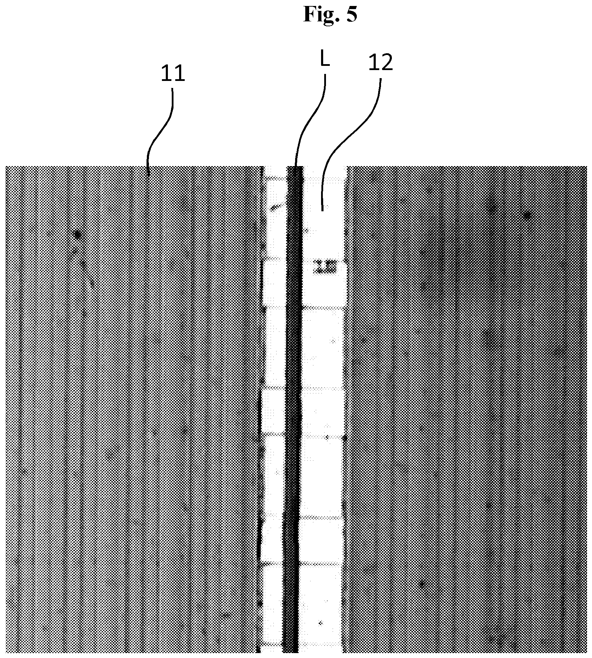

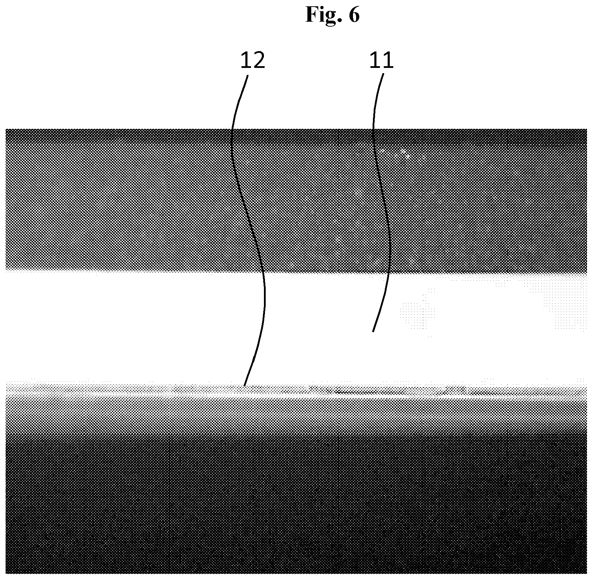

For example, FIGS. 5 and 6 are plan and sectional views showing a cut state of the ceramic.

FIGS. 5 and 6 illustrate a plane and a section in which a stress line is formed in a ceramic having a pattern of about 15 um and a thickness of about 50 um.

According to the present invention as shown in FIGS. 5 and 6, it can be seen that the patterned ceramic, that is, the object to be cut may be cut without thermal damage and loss.

Thus, according to the present invention, a ceramic formed thereon with a pattern is irradiated with a beam and sprayed with a coolant to heat and cool the patterned ceramic at the same time, thereby removing part or all of the pattern, a stress caused by recrystallization of an upper layer or all of the ceramic, or a stress generated by thermal expansion and contraction of the upper layer or all of the ceramic is used, so that the ceramic can be cut while reducing thermal damage.

The present implemented by the inventor is described in detail according to the above embodiments, however, the present invention is not limited to the embodiments and may be modified variously within the scope without departing from the invention.

The above embodiment has described that the ceramic is cut after removing the pattern. However, the present invention is not limited thereto

In addition, according to the present invention, it is unnecessary to apply a water-soluble protective film (HogoMax) to prevent foreign substances from adhering to a processing surface before cutting processing, so that workability and efficiency can be improved, and reliability of a ceramic-applied device can be increased.

### [Industrial Applicability]

The present invention may be applied to a technology for a ceramic cutting method and equipment to cut a ceramic formed therein with a pattern by using a stress generated by recrystallization or thermal expansion and contraction of an upper layer or all of the ceramic by heating and cooling the ceramic at the same time.

## Claims

1. Equipment for cutting a ceramic formed thereon with a pattern, the equipment comprising:
a beam irradiation unit for irradiating a beam of a wavelength absorbed by the pattern and partially absorbed by the ceramic;
a coolant spraying unit including a spray nozzle for spraying a coolant to the ceramic irradiated with the beam, and a flow regulator for adjusting an amount of the coolant sprayed in proportion to an output of the beam irradiated from the beam irradiation unit; and
a separation unit for separating the ceramic by providing force or shock to a stress line formed in the ceramic due to heating and cooling by the beam and the coolant, wherein
a cooling area to which the coolant is sprayed is formed to transmit the beam therethrough and entirely or partially cool an irradiation area to which the beam is irradiated,
part or all of the pattern is removed by simultaneously heating and cooling the ceramic,
a stress is caused by recrystallization or thermal expansion and contraction of an upper layer or all of the ceramic, and
additional force or shock is provided onto the stress line, thereby cutting the ceramic while reducing thermal damage.

2. The equipment of claim 1, wherein the beam is set to have a wavelength of 100 nm to 11 um, and the beam is set to have energy density of 1×10¹ mW/mm² or more.

3. A method for cutting a ceramic formed thereon with a pattern, the method comprising:
(a) irradiating, by a beam irradiation unit, a beam of a wavelength absorbed by the pattern and partially absorbed by the ceramic;
(b) spraying, by a coolant spraying unit, a coolant onto the ceramic irradiated with the beam;
(c) cutting, by a separation unit, the ceramic by providing force or shock to a stress line formed in the ceramic due to heating and cooling by the beam and the coolant; and
(d) adjusting, by a flow regulator, an amount of the coolant sprayed in proportion to an output of the beam irradiated from the beam irradiation unit, wherein
a cooling area to which the coolant is sprayed is formed to transmit the beam therethrough and entirely or partially cool an irradiation area to which the beam is irradiated,
part or all of the pattern is removed by simultaneously heating and cooling the ceramic,
a stress is caused by recrystallization or thermal expansion and contraction of an upper layer or all of the ceramic, and
additional force or shock is provided onto the stress line, thereby cutting the ceramic while reducing thermal damage.

4. The method of claim 3, wherein the beam is set to have a wavelength of 100 nm to 11 um, and the beam is set to have energy density of 1×10¹ mW/mm² or more.
